## Europäisches Patentamt

## European Patent Office

## Office européen des brevets

(11) Numéro de publication: **0 138 710 B1**

(12) **FASCICULE DE BREVET EUROPEEN**

(45) Date de publication du fascicule du brevet:
09.12.87

(51) Int. Cl.⁴: **B 60 R 16/02,** G 06 F 15/16

(21) Numéro de dépôt: **84402049.5**

(22) Date de dépôt: **11.10.84**

(54) Dispositifs de distribution d'énergie électrique comportant des micro-processeurs.

(30) Priorité: **18.10.83 FR 8316843**

(43) Date de publication de la demande:
**24.04.85 Bulletin 85/17**

(45) Mention de la délivrance du brevet:
**09.12.87 Bulletin 87/50**

(84) Etats contractants désignés:
**DE GB IT SE**

(56) Documents cités:
**FR - A - 2 445 769**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Duc, Michel, 10, rue Gauguin, F-91600 Savigny S/Orge (FR)**
Inventeur: **Montreuil, Philippe, 5, allée des Sassiers, F-77200 Torcy (FR)**
Inventeur: **Meuleman, Jean-Jacques, 49, avenue des Pierrots, F-91400 Orsay (FR)**

(74) Mandataire: **Boivin, Claude, 9, rue Edouard-Charton, F-78000 Versailles (FR)**

**0138710**

## Description

La présente invention concerne les dispositifs de distribution d'énergie électrique entre une source de courant et des consommateurs de courant ou périphériques, en particulier ceux destinés à être placés à bord d'un véhicule motorisé terrestre, aérien ou marin.

Le brevet FR-A-2445769 décrit un dispositif de ce genre qui comprend au moins un premier conducteur destiné à acheminer l'énergie électrique d'alimentation des consommateurs de courant, au moins un second conducteur destiné à acheminer des signaux électriques de commande et/ou à recevoir des informations sur l'état des consommateurs de courant, et au moins une unité centrale de commande comportant des moyens d'émission, de réception, de stockage et de traitement des informations codées en commandant l'état de marche ou d'arrêt des consommateurs de courant.

Dans ce dispositif, chaque consommateur de courant comporte un micro-processeur qui conserve son adresse dans une mémoire morte et doit donc avoir une programmation particulière pour chaque consommateur de courant. Les divers micro-processeurs sont donc de même nature mais diffèrent les uns des autres.

La présente invention a pour objet un perfectionnement apporté à ce dispositif distributeur d'énergie dans le but de diminuer son prix de revient.

Selon l'invention, chaque groupe de consommateurs de courant ou périphériques ($P_1$, $P_2$... $P_n$) comprend un même micro-processeur ou organe micro-programmé et un circuit de reconnaissance d'adresse comportant une combinaison binaire câblée, tous les micro-processeurs ou organes micro-programmés contenant le même programme formé de n sous programmes dont chacun comprend à l'un des n périphériques à commander, et d'un début de programme qui effectue la lecture des entrées sur lesquelles le code binaire est présenté dès la mise sous tension.

Pour faire fonctionner l'un des périphériques, on envoie dans le second conducteur un signal tel que si on lui ajoute le code binaire donné par la combinaison binaire câblée du périphérique, on obtient l'adresse où se trouve le sous-programme correspondant au fonctionnement de ce périphérique. Dans ces conditions, le micro-processeur du périphérique considéré recherche dans la table des adresses l'adresse et trouve le programme qui assure le fonctionnement dudit périphérique. En revanche, les codes des combinaisons binaires câblées des autres périphériques étant différents, chacun des micro-processeurs de ces autres périphériques recherche une adresse où ne se trouve aucun programme et n'impose ainsi aucun programme à son périphérique qui reste inactif.

Le dispositif ne nécessite ainsi qu'un seul type d'organe micro-programmé et non pas autant de types d'organe micro-programmé qu'il y a de consommateurs de courant.

De préférence, le circuit de reconnaissance d'adresse comprend une bascule de commande et un commutateur de voies qui est commandé par la bascule et propre à transmettre à l'organe micro-programmé le code binaire donné par la combinaison binaire câblée.

On a décrit ci-après à titre d'exemple non limitatif, un mode de réalisation d'un dispositif de distribution d'énergie électrique selon l'invention, avec référence au dessin annexé dans lequel:

La fig. 1 est le schéma de l'ensemble du dispositif;

la fig. 2 est le schéma d'un consommateur d'énergie ou périphérique;

la fig. 3 est le schéma du dispositif de reconnaissance d'adresse.

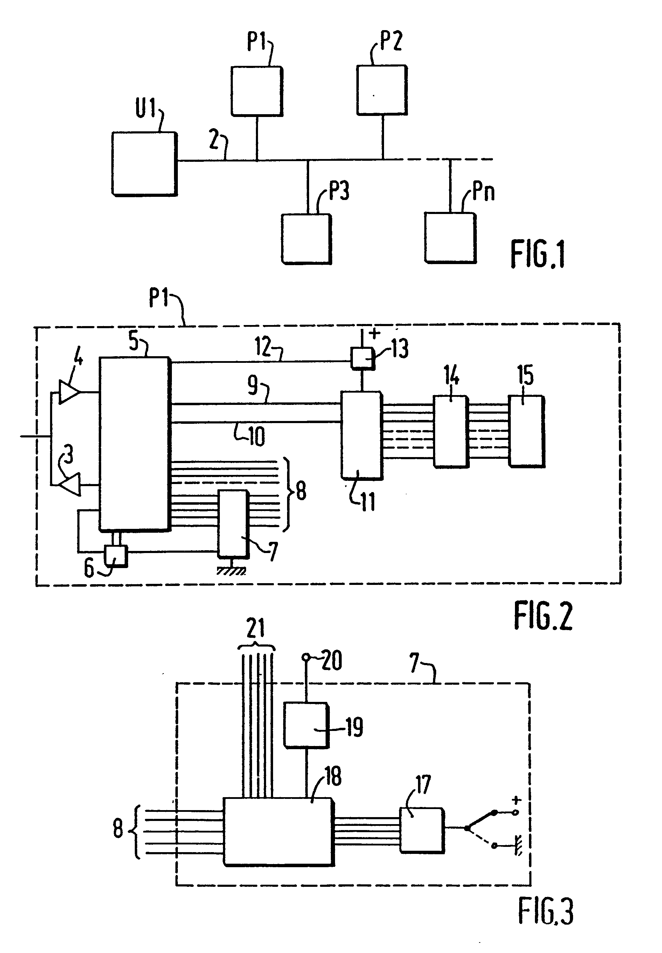

A la fig. 1, une unité centrale $U_1$ est reliée par un bus 2 à un certain nombre de périphériques $P_1$, $P_2$... $P_n$.

A la fig. 2, l'élément périphérique $P_1$ comporte un circuit émetteur 3, un circuit récepteur 4, et un micro-processeur ou organe micro-programmé 5 relié à un «chien de garde» 6 lui-même relié à un circuit de reconnaissance d'adresse 7, le circuit 7 étant interposé dans les entrées/sorties 8 du micro-processeur 5. Ce dernier est relié par des lignes 9 et 10 aux entrées d'un registre série-parallèle 11, et par un ligne 12 à un dispositif de commande 13 de l'alimentation de ce registre. Les sorties de celui-ci sont connectées à un circuit de puissance 14 commandant lui-même un ensemble d'actionneurs 15.

Comme on le voit à la fig. 3, le circuit de reconnaissance d'adresse 7 est composé d'une combinaison binaire câblée 17 communiquant à un commutateur de voies 18 un mot en code binaire et liée soit à la masse, soit au pôle positif.

Lorsqu'il est commandé par la bascule 19, relié par la sortie 20 au chien de garde 6, le commutateur de voies 18 transmet à l'organe micro-programmé 5 le code binaire donné par la combinaison binaire câblée 17.

Le fonctionnement du dispositif est le suivant:

A la fin de l'initialisation, la bascule 19 du circuit 7 reçoit une impulsion de niveau 1 sur son entrée liée au chien de garde 6 (dispositif de sécurité du micro-processeur arrêtant le déroulement de programme en cas d'anomalie) et commande le commutateur de voies 18. Cette commutation permet alors au micro-processeur 5 de lire le code binaire donné par la combinaison binaire câblée 17.

Le micro-processeur 5 est donc codé sur les ports concernés selon un code binaire lui permettant de se reconnaître.

Le début du programme, commun à tous les périphériques $P_1$...$P_n$ effectue la lecture des entrées sur lesquelles est présenté le code binaire. Cette valeur est d'abord multipliée par deux, puis le résultat est ajouté à l'adresse de base de la table des adresses.

La valeur lue présente en mémoire est multipliée par deux car l'adresse du programme est codée sur 2 octets.

La somme de cette valeur et de la valeur de l'adresse de base de la table des adresses est calculée. A cette nouvelle valeur correspond dans la table des adresses, l'adresse du programme spécifique du périphérique concerné; ce programme est alors exécuté.

Ainsi, par exemple, si la valeur lue est 00000010 soit 2, la valeur multipliée par deux devient 00000100 soit 4. Si l'adresse de base de la table des adresses est 1000, la somme de l'adresse de base et de la valeur lue multipliée par deux sera 1000 + 4 soit 1004; cette adresse ainsi obtenue, correspond à un emplacement mémoire qui contient l'adresse de début du programme du périphérique ayant pour code extérieur 00000010.

Le programme commun à tous les organes micro-programmés comprend donc d'un part un début de programme qui effectue la lecture des entrées sur lesquelles est présenté le code binaire câblé, effectue la multiplication par deux de la valeur lue, et ajoute la nouvelle valeur obtenue à une adresse de base présente en mémoire, et d'autre part un nombre n de programmes spécifiques, éléments du programme commun (n étant le nombre de périphériques), qui sont sélectionnés grâce à l'adresse calculée.

Selon l'exemple choisi précédemment la table des adresses serait de la forme suivante:

| adresse | contenu |
| --- | --- |
| 1000 | 20 |
| 1001 | 00 |
| 1002 | 30 |
| 1003 | 00 |
| 1004 | 40 |
| 1005 | 00 |
| 1006 | 50 |
| 1007 | 00 |
| 1008 | 60 |
| 1009 | 00 |

## Revendications

1. Dispositif de distribution d'énergie électrique entre une source de courant et plusieurs groupes de consommateurs de courant électrique ou périphériques ($P_1$, $P_2$, $P_n$), qui est plus particulièrement destiné à être placé à bord d'un véhicule motorisé terrestre, aérien ou marin, et comporte au moins un premier conducteur destiné à acheminer l'énergie électrique d'alimentation des consommateurs de courant, au moins un second conducteur destiné à acheminer des signaux électriques de commande et/ou à recevoir des informations sur l'état des consommateurs de courant et au moins une unité centrale de commande ($U_1$) comportant des moyens d'émission, de réception, de stockage et de traitement des informations codées en commandant l'état de marche ou d'arrêt des consommateurs de courant, caractérisé en ce que chaque groupe de consommateurs de courant ou périphériques ($P_1$, $P_2$...$P_n$) comprend un même microprocesseur ou organe micro-programmé (5) et un circuit de reconnaissance d'adresse (7) comportant une combinaison binaire câblée (17), tous les micro-processeurs ou organes micro-programmés contenant le même programme formé de n sous-programmes dont chacun correspond à l'un des n périphériques à commander, et d'un début de programme qui effectue la lecture des entrées sur lesquelles le code binaire est présenté dès la mise sous tension.

2. Dispositif selon la revendication 1, caractérisé en ce que le circuit de reconnaissance d'adresse (7) comporte une bascule de commande (19) et un commutateur de voies (18) qui est commandé par la bascule et propre à transmettre à l'organe micro-programmé (5) le code binaire donné par la combinaison binaire câblée.

## Patentansprüche

1. Vorrichtung zur Verteilung elektrischer Energie zwischen einer Stromquelle und mehreren Gruppen von elektrischen Stromverbrauchern oder Peripheriegeräten ($P_1$, $P_2$...$P_n$), insbesondere für den Einbau an Bord eines Land-, Luft- oder Wasserfahrzeuges, mit wenigstens einem ersten Stromleiter zur Weiterleitung der elektrischen Versorgungsenergie an die Stromverbraucher, mit wenigstens einem zweiten Stromleiter zur Weiterleitung elektrischer Steuersignale und/oder zum Empfang von Informationen über den Zustand der Stromverbraucher und mit wenigstens einer zentralen Steuereinheit ($U_1$) mit Mitteln zum Senden, Empfangen, Speichern und Verarbeiten von codierten Informationen, wodurch der Betriebs- oder Ausschaltzustand der Stromverbraucher gesteuert wird, dadurch gekennzeichnet, dass jede Gruppe der Stromverbraucher oder der Peripheriegeräte ($P_1$, $P_2$...$P_n$) einen gleichen Mikroprozessor oder ein gleiches mikroprogrammiertes Glied (5) sowie einen Adressenerkennungs-Stromkreis (7) mit einer fest verdrahteten Binärkombination (17) enthält, wobei alle Mikroprozessoren oder mikroprogrammierten Glieder dasselbe Programm enthalten, welches aus n Unterprogrammen gebildet ist, von denen jedes einem der zu steuernden Peripherie-Geräte n zugeordnet ist, und aus einem Programmanfang, welcher das Lesen der Eingänge durchführt, an denen der Binärcode anliegt, wenn eine Beaufschlagung mit Spannung erfolgt.

2. Vorrichtung nach Anspruch 1, dadurch gekennzeichnet, dass der Adressenerkennungs-Stromkreis (7) eine Steuer-Kippschaltung (19) und einen Kanalumschalter (18) enthält, der durch die Kippschaltung gesteuert und geeignet ist, den von der fest verdrahteten Binärkombination gelieferten Binärcode zum mikroprogrammierten Glied (5) zu übermitteln.

## Claims

1. A device for distributing electric energy between a current source and several groups of consumers or peripherals ($P_1$, $P_2$...$P_n$), which is more particularly intended to be placed on board a motorized land, air or sea vehicle, and includes at least a first conductor for conveying the electric energy supplying the current consumers, at least a second conductor for conveying the electric control signals and/or for receiving information concerning the state of the current consumers and at least one central control unit ($U_1$) including means for transmitting, receiving, storing and processing information coded by controlling the on or off state of the current consumers, characterized in that each group of current consumers or peripherals ($P_1$, $P_2$...$P_n$) has the same micro-processor or micro-programmed means (5) and an address recognition circuit (7) including a wired binary combination (17), all the micro-processors or micro-programmed means containing the same programme formed of n sub-programmes, each of which corresponds to one of the n peripherals to be controlled, and from a programme beginning which effects the reading of the inputs at which the binary code is presented on switch-on.

2. Device according to claim 1, characterized in that the address recognition circuit (7) includes a control flip-flop (19) and a channel switch (18) which is controlled by the flip-flop and is adapted for transmitting to the micro-programmed means (5) the binary code given by the wired binary combination.

0138710

FIG.1

FIG.2

FIG.3